# EUROPÄISCHE PATENTSCHRIFT

(11) **EP 1 238 888 B1**
(45) Veröffentlichungstag und Bekanntmachung des Hinweises auf die Patenterteilung: **13.04.2005**
(21) Anmeldenummer: 02004301.4
(22) Anmeldetag: 28.02.2002
(51) Int. Cl.: B62D 7/22, B62D 1/10, B62D 1/04

(54) **Schwingungsgedämpftes Fahrzeuglenkrad**
Vibration insulated steering wheel
Volant de direction avec isolation de vibrations

(30) Priorität: 08.03.2001 DE 20104043 U; 18.12.2001 DE 20120465 U
(43) Veröffentlichungstag der Anmeldung: 11.09.2002
(73) Patentinhaber: TRW Automotive Safety Systems GmbH, 63743 Aschaffenburg (DE)
(72) Erfinder: Kreuzer, Martin, 63839 Kleinwallstadt (DE); Bieber, Udo, 63843 Niedenberg (DE); Lorenz, Christian, 63849 Leidersbach 3 (DE)
(74) Vertreter: Kitzhofer, Thomas, Dipl.-Ing.

(56) Entgegenhaltungen:
- EP-A- 0 003 426
- DE-A- 19 852 315
- DE-U- 20 016 637
- PATENT ABSTRACTS OF JAPAN vol. 017, no. 697 (M-1532), 20. Dezember 1993 (1993-12-20) & JP 05 238394 A (SUZUKI MOTOR CORP), 17. September 1993 (1993-09-17)

## Beschreibung

Die Erfindung betrifft ein schwingungsgedämpftes Fahrzeuglenkrad, mit einer Nabe mit einer Lenkradlagerung und mit einem Angriffsbereich für den Fahrer, insbesondere einem Lenkradkranz.

Zur Erhöhung des Komforts und der Fahrsicherheit ist es vorteilhaft, wenn Fahrzeugschwingungen, die durch unterschiedliche Ursachen entstehen und die auf das Lenkrad, insbesondere auf den Lenkradkranz, übertragen werden, gedämpft oder ganz unterdrückt werden können. Zu diesem Zweck werden zum Beispiel sogenannte Schwingungstilger eingesetzt. Ein bekannter Schwingungstilger enthält eine im Lenkrad federnd gelagerte Masse, die bei der Eigenfrequenz des Schwingungstilgers in Schwingung versetzt wird und so die Schwingungsenergie des Lenkrads aufnimmt. Bei diesen Systemen ist nachteilig, daß sie zum einen nur an einzelne Frequenzen angepaßt werden können und zum anderen einen großen Bauraum im Inneren des Lenkrads bzw. der Nabe beanspruchen.

Dokument JP-A-5 238 394 offenbart ein mit einem Schwingungstilger verschenes Fahrzeuglenkrad, wobei der Schwingungstilger mittels eines elektromagnetischen Feldes umschaltbar ist.

Aufgabe der Erfindung ist es, ein schwingungsgedämpftes Lenkrad zu schaffen, das sich bei einer in einem gewissen Frequenzbereich abstimmbaren Dämpfung mit relativ geringem Raumbedarf für die schwingungsdämpfenden Komponenten realisieren läßt.

Dies wird bei einem gattungsgemäßen Lenkrad dadurch erreicht, daß im Kraftflußweg zwischen der Lenkradlagerung und dem Angriffsbereich ein Schwingungsdämpfer vorgesehen ist, dessen Dämpfungseigenschaften über ein vorgesehenes elektrisches oder magnetisches Feld verstellbar sind. Der Schwingungsdämpfer ist sozusagen zwischen Nabe und Lenkradkranz zwischengeschaltet, so daß Lenkradlagerung und Lenkradkranz schwingungsmäßig entkoppelt werden können. Über die Höhe des elektrischen oder magnetischen Feldes, z.B. über eine angelegte Spannung oder einen elektrischen Strom, lassen sich die Dämpfungseigenschaften, d.h. die dämpfbaren Schwingungsfrequenzen, einfach einstellen. Eine zusätzliche Tilgermasse kann entfallen.

Bevorzugt weist der Schwingungsdämpfer eine in den Kraftfluß zwischengeschaltete Substanz auf, deren Härte und/oder Viskosität durch das elektrische oder magnetische Feld variabel eingestellt werden können bzw. kann. Härte und Viskosität beeinflussen die mechanischen Schwingungseigenschaften der Substanz und damit die dämpfbaren Schwingungsfrequenzen.

Die Substanz ist bevorzugt eine elektrorheologische Flüssigkeit. Es kann eine handelsübliche elektrorheologische Flüssigkeit verwendet werden, die sich dadurch auszeichnet, daß sich ihre Viskosität durch den Einfluß eines elektrischen Feldes in einem weiten Bereich verändern läßt. Bei hohen Feldstärken verhalten sich diese Flüssigkeiten bis hin zu gewissen Grenzbedingungen wie ein "weicher" Festkörper (hier als "Quasi-Festkörpermodus" bezeichnet), der eine Kraftübertragung über die elektrorheologische Flüssigkeit zuläßt, aber gleichzeitig durch die Höhe der Feldstärke in seiner Härte und damit seinen Schwingungseigenschaften veränderbar ist.

Es ist auch denkbar, als Substanz eine magnetorheologische Flüssigkeit einzusetzen, deren Viskosität durch ein Magnetfeld beeinflußbar ist. Allerdings bietet sich aufgrund des begrenzten Platzangebots die Verwendung einer elektrorheologischen Flüssigkeit an, da Elektroden zur Erzeugung eines elektrischen Felds wie z.B. Drähte oder Metallbleche einfacher im Lenkrad anzuordnen sind als Spulen zur Erzeugung eines Magnetfelds.

Um eine frequenzabhängige Schwingungsdämpfung zu erreichen, ist bevorzugt eine Steuereinheit vorgesehen, die die Stärke des von den Elektroden erzeugten elektrischen oder magnetischen Felds bestimmen kann, indem sie die daran angelegte Spannung bzw. den Stromfluß einstellt. Die Steuereinheit ist bevorzugt mit Sensoren verbunden, die Vibrationen des Lenkrads, insbesondere der Lenksäule, detektieren können, wobei die Steuereinheit die Feldstärke in Abhängigkeit von der Frequenz der detektierten Vibrationen einstellen kann, um so die Schwingungsamplitude des Lenkrades zu verringern. Insbesondere kann die Steuereinheit bevorzugt die Feldstärke so variieren, daß im Angriffsbereich keine Schwingungen angeregt werden.

In einer bevorzugten Ausführungsform der Erfindung weist die Nabe oder der Angriffsbereich wenigstens einen Vorsprung auf, der in eine am jeweiligen anderen Teil ausgebildete Vertiefung ragt, wobei zwischen dem Vorsprung und der Vertiefung die Substanz vorgesehen ist. Der Vorsprung am Angriffsbereich kann beispielsweise im Bereich einer Speiche ausgebildet sein. Die Nabe bzw. die Lenkradlagerung und der Angriffsbereich sind durch die Substanz miteinander gekoppelt. Die Substanz wird vorzugsweise im "Quasi-Festkörpermodus" betrieben, da so bei Betätigung des Lenkrads eine Druckbelastung durch die Substanz übertragen werden kann, um eine Lenkbewegung auszuführen. Dennoch können die Härte und damit die Dämpfungseigenschaften immer noch über die Höhe der Feldstärke angepaßt werden. Dieses System kann auch im Bereich der Nabe, wo mehr Platz zur Unterbringung des Schwingungsdämpfers ist, vorgesehen sein, wobei die Nabe mehrgeteilt wird und die Substanz Nabenteile miteinander verbindet.

Nabe und der Angriffsbereich oder Nabenteile sind vorzugsweise nur durch einen schmalen Zwischenraum (0,1 bis 5 mm Breite) voneinander getrennt, der mit der elektrorheologischen oder magnetorheologischen Flüssigkeit gefüllt ist. Da sich Nabe und Angriffsbereich an keiner Stelle direkt berühren, werden z.B. über die Lenkwelle auf die Lenkradlagerung übertragene Fahrzeugschwingungen nicht über direkten Kontakt von der Nabe zum Angriffsbereich bzw. von Nabenteilen übertragen, sondern können nur über die elektrorheologische oder magnetorheologische Flüssigkeit zum Lenkradkranz gelangen. Über die Höhe der Feldstärke läßt sich jedoch die Härte bzw. Viskosität der Substanz so schnell und flexibel an die jeweilige Schwingungsfrequenzen anpassen, daß Schwingungen des Angriffsbereichs effektiv gedämpft werden können.

In einer anderen bevorzugten Ausführungsform der Erfindung umfaßt der Schwingungsdämpfer einen mit der Substanz gefüllten Raum, der einen geschlossenen Ring bildet. Auch hier ist dieser Raum so ausgebildet, daß er Nabe und Angriffsbereich bzw. die Nabenteile voneinander trennt und daß Nabe und Angriffsbereich über diesen Raum miteinander gekoppelt sind.

Es ist vorteilhaft, wenn der Raum eine von einem Kreisring abweichende Form hat, zum Beispiel die Form eines Polygons. Auf diese Weise kann die Geometrie des ringförmigen Raums ausgenutzt werden, um die Kraftübertragung über die Substanz zu ermöglichen. Die Substanz bildet einen polygonringförmigen "Quasi-Festkörper", der durch seine Form daran gehindert ist, sich im ringförmigen Raum zu drehen, wenn auf ihn eine Rotationskraft ausgeübt wird. Statt dessen wird die von der Lenkradlagerung (bzw. der Nabe) oder dem Angriffsbereich stammende Rotationskraft ohne Spiel auf den jeweils anderen Lenkradabschnitt übertragen. Die Ecken des Polygons wirken als Vorsprünge, die in Vertiefungen des anderen Teils ragen, um eine Druckbelastung durch die zwischen Vorsprüngen und Vertiefungen vorgesehene Substanz bei Betätigung des Lenkrads zu erreichen.

Um die Kraftübertragung zwischen den durch die Substanz gekoppelten Teilen zu erhöhen, weisen die den Raum begrenzenden Wandungen vorzugsweise eine Struktur auf, die so ausgelegt ist, daß sie die Haftung der Substanz an den Wandungen unterstützt. Hierdurch wird die Lenkung direkter, da ein Schlupf zwischen der Substanz und der Wandung weitgehend unterbunden ist, wenn die Substanz im "Quasi-Festkörpermodus" betrieben wird.

Um eine sichere Lenkbetätigung auch in einem Extrembetrieb, zum Beispiel bei einer extrem heftigen und schnellen Lenkbewegung oder bei einem Ausfall des elektrischen oder magnetischen Feldes sicherzustellen, ist der Schwingungsdämpfer vorteilhaft so ausgelegt, daß im Extrembetrieb eine durchgehende formschlüssige Verbindung zwischen dem Angriffsbereich und der Lenkradlagerung ermöglicht ist. In diesem Fall kann der Schwingungsdämpfer umgangen werden, so daß eine direkte Koppelung zwischen den an die Substanz angrenzenden Teilen besteht.

Weitere Merkmale und Vorteile der Erfindung ergeben sich aus der nachfolgenden Beschreibung zweier Ausführungsbeispiele mit Bezug auf die beigefügten Zeichnungen. In diesen zeigen:
- Figur 1 eine Schnittansicht eines Abschnitts eines Skeletts eines erfindungsgemäßen Lenkrads gemäß einer ersten Ausführungsform;
- Figur 2 eine schematische Draufsicht eines Abschnitts eines erfindungsgemäßen Lenkrades gemäß einer zweiten Ausführungsform; und
- Figur 3 eine schematische Darstellung der Wandstruktur des substanzgefüllten Raums aus Figur 2.

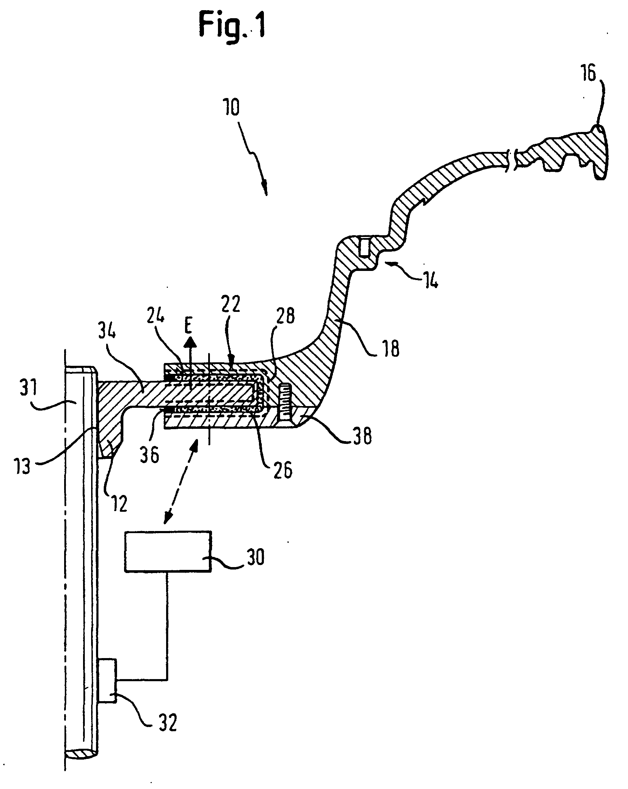

Figur 1 zeigt eine erste Ausführungsform eines schwingungsgedämpften Lenkrads 10. Das Lenkrad 10 weist eine Nabe 12 auf, von der nur das Skelett dargestellt ist. In der Nabe 12 ist eine Lenkradlagerung 13 vorgesehen, in der z.B. auf bekannte Weise das Ende einer hier nicht gezeigten Lenkwelle aufgenommen ist. Das Lenkrad 10 enthält außerdem einen Angriffsbereich 14 für den Fahrer, zu dem hier ganz allgemein ein Lenkradkranz 16 und Speichen 18 zusammengefaßt sind, von denen in Figur 1 ebenfalls nur das Skelett dargestellt ist.

Im Kraftfluß zwischen Nabe 12 und Angriffsbereich 14 (hier den Speichen) ist ein Schwingungsdämpfer 22 vorgesehen. Nabe 12 und Angriffsbereich 14 sind im Bereich des Schwingungsdämpfers 22 durch einen Zwischenraum 24 voneinander getrennt.

In der dargestellten Ausführungsform weist die Nabe 12 einen Vorsprung 34 auf, während der Angriffsbereich 14 im Bereich der Speiche 18 eine Vertiefung 36 hat. Die Vertiefung 36 kann z.B. durch eine Ausnehmung im Angriffsbereich 14 sowie einen aufgeschraubten Deckel 38 realisiert sein. Der Zwischenraum 24 ist zwischen dem Vorsprung 34 und der Vertiefung 36 gebildet und so ausgelegt, daß zwischen Nabe 12 und Angriffsbereich 14 kein direkter Formschluß besteht.

Im Zwischenraum 24 befindet sich eine Substanz 26, deren Viskosität und/oder Härte durch ein elektrisches oder magnetisches Feld beeinflußbar ist. Im hier gezeigten Beispiel handelt es sich um eine elektrorheologische Flüssigkeit.

Die zur Ansteuerung der elektrorheologischen Flüssigkeit notwendigen elektrischen Felder E (angedeutet in den Figuren durch einen Pfeil) werden von Elektroden 28 erzeugt, die in der Nabe 12 und im Angriffsbereich 14 in direkter Nähe zum Zwischenraum 24 angeordnet sind (schematisch dargestellt mit gestrichelten Linien). Als Elektroden können z.B. Metallbleche verwendet werden. Die jeweils günstigste Anordnung der Elektroden hängt von den Einsatzbedingungen und von der exakten Geometrie des jeweiligen Lenkrads ab und ist für einen Fachmann leicht zu bestimmen. Die Elektroden sollten zur Anlegung einer Hochspannung von einigen Kilovolt bei geringen Stromstärken von wenigen Milliampere ausgelegt sein und entsprechend gegenüber den restlichen Teilen des Lenkrads 10 elektrisch isoliert sein.

Die Spannung der Elektroden 28 und damit die von diesen erzeugte Feldstärke E wird durch eine Steuereinheit 30 erzeugt, die mit einem an der Lenkradlagerung bzw. an der Lenksäule 31 angeordneten Schwingungssensor 32 in Verbindung steht.

Um einen direkten Kontakt zwischen Nabe 12 und Angriffsbereich 14 zu verhindern und um ein direktes Betätigen der Lenkung zu ermöglichen, wird die von den Elektroden 28 erzeugte Feldstärke bevorzugt so hoch gewählt, daß sich die Substanz 26 stets im "Quasi-Festkörpermodus" befindet.

Über die Lenkwelle auf die Nabe 12 übertragene Schwingungen, die über die Substanz 26 auf den Angriffsbereich 14 und damit den Lenkradkranz 16 weitergeleitet werden, werden vom Schwingungssensor 32 detektiert und an die Steuereinheit 30 gemeldet. Diese stellt daraufhin die elektrische Feldstärke E über die an die Elektroden 28 angelegte Spannung derart ein, daß die derzeit auf den Lenkradkranz 16 übertragene Schwingungsfrequenz vom Schwingungsdämpfer 22 gedämpft wird. Dies ist möglich, da die Viskosität bzw. die Härte der Substanz 26 gezielt durch die Feldstärke einstellbar ist und über die Härte bzw. Viskosität die Schwingungseigenschaften der Substanz 26 beeinflußt werden können.

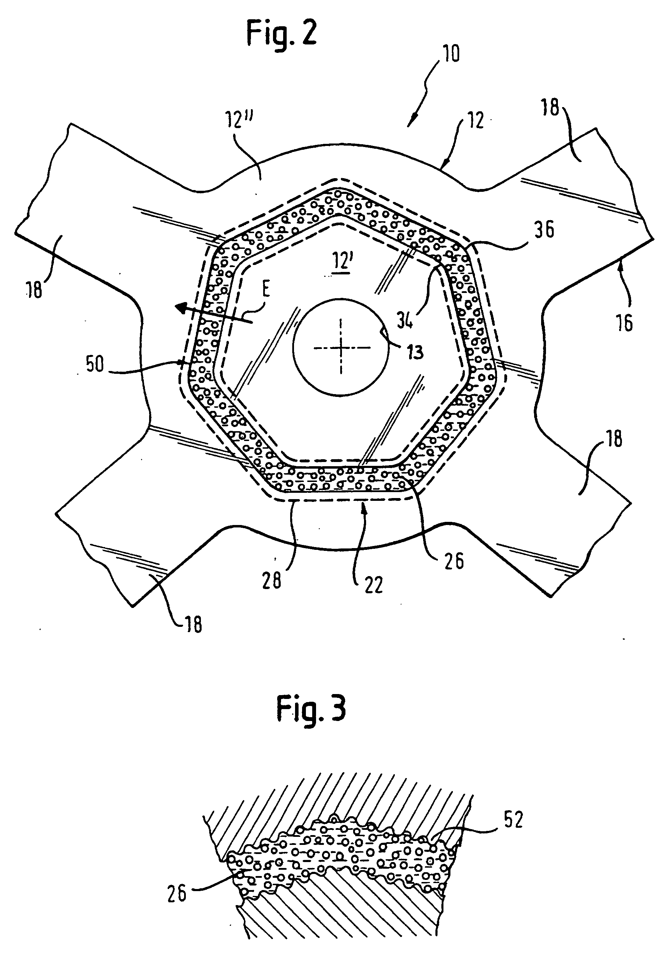

Die in Figur 2 dargestellte zweite Ausführungsform unterscheidet sich von der ersten Ausführungsform darin, daß die Nabe 12 in ein innenliegendes Nabenteil 12' und ein außenliegendes Nabenteil 12" zweigeteilt ist, wobei die beiden Teile 12', 12" durch einen ringförmigen Raum 50 voneinander getrennt sind, der mit einer elektrorheologischen Substanz 26 gefüllt ist. Das zweite Nabenteil 12" bildet einen Abschnitt des Angriffsbereichs 14. Der ringförmige Raum 50 kann im Querschnitt so ausgebildet sein wie der in Figur 1 gezeigte Zwischenraum 24. Auch die Anordnung der Elektroden 28 kann analog gewählt werden.

Der ringförmige Raum 50 hat die Form eines Polygons, das im hier dargestellten Beispiel sieben Ecken aufweist. Die Vorsprünge 34 des innenliegenden Nabenteils 12' greifen also in die Vertiefungen 36 des außenliegenden Nabenteils 12". Bevorzugt wird die elektrorheologische Flüssigkeit auch in diesem Fall im "Quasi-Festkörpermodus" betrieben.

Die Abmessungen und die Geometrie der Nabenteile 12', 12" sowie des ringförmigen Raums 50 sind so aufeinander abgestimmt, daß sich das innere Nabenteil 12' nur um einen kleinen Winkelbereich drehen kann, bevor es mit der Wandung des äußeren Teils 12" in Kontakt kommen würde, wenn an der Substanz 26 kein elektrisches Feld E anliegt. Diese Anordnung ermöglicht es, in einem Extrembetrieb eine durchgehende formschlüssige Verbindung zwischen dem Angriffsbereich 14 und dem Nabenbereich 12 herzustellen. Dies kann z.B. notwendig sein, wenn in einer Notfallsituation ein extremer Lenkeinsatz mit sehr hohen Kräften notwendig ist oder wenn das von den Elektroden 28 erzeugte elektrische Feld ausfällt. In diesem Fall wird durch die Lenkbewegung des Benutzers das außenliegende Nabenteil 12" soweit gegenüber dem innenliegenden Nabenteil 12' verdreht, bis deren Wandungen aneinanderliegen. Jetzt kann eine Lenkkraft direkt auf die Lenkradlagerung 13 übertragen werden.

Bevorzugt weisen die Wandungen der mit der Substanz 26 gefüllten Räume 24, 50 eine Struktur 52 wie etwa eine Körnung oder eine Riffelung auf, die auf bekannte Weise so gewählt ist, daß die Substanz 26 vor allem im "Quasi-Festkörpermodus" eine gute Haftung an den Wandungen findet. Dies ist, sehr schematisch, in Figur 3 gezeigt.

## Patentansprüche

1. Schwingungsgedämpftes Fahrzeuglenkrad, mit einer Nabe (12; 12', 12") mit einer Lenkradlagerung (13) und einem Angriffsbereich (14) für den Fahrer, insbesondere einem Lenkradkranz (16), **dadurch gekennzeichnet, daß** im Kraftflußweg zwischen der Lenkradlagerung (13) und dem Angriffsbereich (14) ein Schwingungsdämpfer (22) vorgesehen ist, dessen Dämpfungseigenschaften über ein vorgesehenes elektrisches oder magnetisches Feld (E) verstellbar sind.

2. Lenkrad nach Anspruch 1, **dadurch gekennzeichnet, daß** der Schwingungsdämpfer (22) eine in den Kraftfluß zwischengeschaltete Substanz (26) aufweist, deren Härte und/oder Viskosität durch das elektrische oder magnetische Feld (E) variabel eingestellt werden können bzw. kann.

3. Lenkrad nach Anspruch 2, **dadurch gekennzeichnet, daß** die Substanz (26) eine elektrorheologische Flüssigkeit ist.

4. Lenkrad nach Anspruch 2, **dadurch gekennzeichnet, daß** die Substanz (26) eine magnetorheologische Flüssigkeit ist.

5. Lenkrad nach einem der Ansprüche 2 bis 4, **dadurch gekennzeichnet, daß** der Schwingungsdämpfer (22) einen mit der Substanz (26) gefüllten Raum (50) umfaßt, der einen geschlossenen Ring bildet.

6. Lenkrad nach Anspruch 5, **dadurch gekennzeichnet, daß** der Raum (50) eine von einem Kreisring abweichende Form hat.

7. Lenkrad nach Anspruch 5, **dadurch gekennzeichnet, daß** der Raum (50) eine Polygonform hat.

8. Lenkrad nach einem der Ansprüche 2 bis 7, **dadurch gekennzeichnet, daß** die Nabe (12) oder der Angriffsbereich (14) wenigstens einen Vorsprung (34) aufweist, der in eine am jeweiligen anderen Teil (14, 12) ausgebildete Vertiefung (36) ragt, wobei zwischen dem Vorsprung (34) und der Vertiefung (36) die Substanz (26) vorgesehen ist, wobei Nabe (12) und Angriffsbereich (14) durch die Substanz (26) miteinander gekoppelt sind, so daß bei Betätigung des Lenkrads eine Druckbelastung durch die Substanz (26) übertragen werden kann.

9. Lenkrad nach einem der Ansprüche 2 bis 7, **dadurch gekennzeichnet, daß** die Nabe (12) mehrgeteilt ist und daß ein innenliegendes Nabenteil (12') und ein außenliegendes Nabenteil (12") durch die Substanz (26) miteinander gekoppelt sind, wobei eines der Nabenteile (12', 12") Vorsprünge (34) hat, die in Vertiefungen (36) des anderen Nabenteils (12", 12') ragen, so daß eine Druckbelastung durch die zwischen den Vorsprüngen (34) und Vertiefungen (36) vorgesehene Substanz (26) bei Betätigung des Lenkrads übertragen werden kann.

10. Lenkrad nach einem der vorhergehenden Ansprüche, **dadurch gekennzeichnet, daß** der Schwingungsdämpfer (22) in einem Extrembetrieb eine durchgehende formschlüssige Verbindung zwischen dem Angriffsbereich (14) und der Lenkradlagerung (13) erlaubt.

11. Lenkrad nach einem der vorhergehenden Ansprüche, **dadurch gekennzeichnet, daß** die Substanz (26) in einem Raum (24; 50) aufgenommen ist und daß die den Raum (24; 50) begrenzenden Wandungen eine Struktur (52) aufweisen, die so ausgelegt ist, daß sie die Haftung der Substanz (26) an den Wandungen unterstützt.

12. Lenkrad nach einem der vorhergehenden Ansprüche, **dadurch gekennzeichnet, daß** im Lenkrad (10) Elektroden (28) zur Erzeugung des elektrischen oder magnetischen Felds (E) vorgesehen sind.

13. Lenkrad nach einem der vorhergehenden Ansprüche, **dadurch gekennzeichnet, daß** eine Steuereinheit (30) vorgesehen ist, die die Stärke des elektrischen oder magnetischen Felds (E) bestimmen kann.

14. Lenkrad nach Anspruch 13, **dadurch gekennzeichnet, daß** Sensoren (32) vorgesehen sind, die Vibrationen der Säule (31), insbesondere der Lenkradlagerung, detektieren können und daß die Steuereinheit (30) die Feldstärke in Abhängigkeit von den detektierten Vibrationen variiert.

15. Lenkrad nach Anspruch 14, **dadurch gekennzeichnet, daß** die Feldstärke von der Steuereinheit (30) so variiert wird, daß keine Schwingungen im Angriffsbereich (14) angeregt werden.

## Claims

1. A vibration-damped vehicle steering wheel, comprising a hub (12; 12', 12") with a steering wheel mounting (13) and a handling region (14) for the driver, in particular a steering wheel rim (16), **characterized in that** in the path of the flux of force between the steering wheel mounting (13) and the handling region (14) a vibration damper (22) is provided, the damping characteristics of which are adjustable via an electric or magnetic field (E) provided.

2. The steering wheel according to claim 1, **characterized in that** the vibration damper (22) has a substance (26) intercalated into the flux of force, the hardness and/or viscosity of which can be variably adjusted by the electric or magnetic field (E).

3. The steering wheel according to Claim 2, **characterized in that** the substance (26) is an electrorheological fluid.

4. The steering wheel according to Claim 2, **characterized in that** the substance (26) is a magnetorheological fluid.

5. The steering wheel according to any of Claims 2 to 4, **characterized in that** the vibration damper (22) comprises a space (50) filled with the substance (26) and forming a closed ring.

6. The steering wheel according to Claim 5, **characterized in that** the space (50) has a shape deviating from a circular ring.

7. The steering wheel according to Claim 5, **characterized in that** the space (50) has a polygonal shape.

8. The steering wheel according to any of Claims 2 to 7, **characterized in that** the hub (12) or the handling region (14) has at least one projection (34), which projects into a depression (36) formed on the respective other part (14, 12), the substance (26) being provided between the projection (34) and the depression (36), the hub (12) and the handling part (14) being coupled with each other by the substance (26), so that upon actuation of the steering wheel a compressive load can be transferred through the substance (26).

9. The steering wheel according to any of Claims 2 to 7, **characterized in that** the hub (12) is divided into several parts and that an interior hub part (12') and an exterior hub part (12") are coupled with each other by the substance (26), one of the hub parts (12', 12") having projections (34) which project into depressions (36) of the other hub part (12", 12'), so that upon actuation of the steering wheel a compressive load can be transferred through the substance (26) provided between the projections (34) and the depressions (36).

10. The steering wheel according to any of the preceding claims, **characterized in that** the vibration damper (22), in an extreme operation, permits a continuous form-fitting connection between the handling region (14) and the steering wheel mounting (13).

11. The steering wheel according to any of the preceding claims, **characterized in that** the substance (26) is held in a space (24; 50) and that the walls delimiting the space (24; 50) have a structure (52) which is designed to support the adhesion of the substance (26) to the walls.

12. The steering wheel according to any of the preceding claims, **characterized in that** in the steering wheel (10) electrodes (28) are provided for the generation of the electric or magnetic field (E).

13. The steering wheel according to any of the preceding claims, **characterized in that** a control unit (30) is provided, which can determine the intensity of the electric or magnetic field (E).

14. The steering wheel according to Claim 13, **characterized in that** sensors (32) are provided, which can detect vibrations of the column (31), in particular of the steering wheel mounting, and that the control unit (30) varies the field intensity as a function of the detected vibrations.

15. The steering wheel according to Claim 14, **characterized in that** the field intensity is varied by the control unit (30) such that no vibrations are stimulated in the handling region (14).

## Revendications

1. Volant de direction avec amortissement de vibrations, comportant un moyeu (12 ; 12', 12") présentant un logement (13) de volant de direction et une zone de préhension (14) pour le conducteur, en particulier une couronne de volant de direction (16), **caractérisé en ce que** dans la voie de flux de force entre le logement (13) de volant de direction et la zone de préhension (14) est prévu un amortisseur de vibrations (22) dont les caractéristiques d'amortissement sont réglables par l'intermédiaire d'un champ (E) électrique ou magnétique prévu.

2. Volant de direction selon la revendication 1, **caractérisé en ce que** l'amortisseur de vibrations (22) présente une substance (26) intercalée dans le flux de force, dont la dureté et/ou la viscosité peut/peuvent être réglée(s) de manière variable par le champ (E) électrique ou magnétique.

3. Volant de direction selon la revendication 2, **caractérisé en ce que** la substance est un liquide électrorhéologique.

4. Volant de direction selon la revendication 2, **caractérisé en ce que** la substance est un liquide magnétorhéologique.

5. Volant de direction selon l'une des revendications 2 à 4, **caractérisé en ce que** l'amortisseur de vibrations (22) comprend un espace (50) rempli de la substance (26), qui forme un anneau fermé.

6. Volant de direction selon la revendication 5, **caractérisé en ce que** l'espace (60) a une forme divergente d'un anneau circulaire.

7. Volant de direction selon la revendication 5, **caractérisé en ce que** l'espace (60) a une forme polygonale.

8. Volant de direction selon l'une des revendications 2 à 7, **caractérisé en ce que** le moyeu (12) ou la région de préhension (14) présente au moins une saillie (34) qui fait saillie dans un renfoncement (36) réalisé dans l'autre partie (14, 12) respective, la substance (26) étant prévue entre la saillie (34) et le renfoncement (36), le moyeu (12) et la région de préhension (14) étant accouplés l'un à l'autre par la substance (26) de telle sorte que lors de l'actionnement du volant de direction, une sollicitation par pression peut être transmise par la substance (26).

9. Volant de direction selon l'une des revendications 2 à 7, **caractérisé en ce que** le moyeu (12) est en plusieurs parties et **en ce qu'**une partie de moyeu (12') située à l'intérieur et une partie de moyeu (12") située à l'extérieur sont accouplées l'une à l'autre par la substance (26), une des parties de moyeu (12', 12") possèdant des saillies (34) qui font saillie dans des renfoncements 836) de l'autre partie de moyeu (12', 12"), de sorte qu'une sollicitation par pression par la substance (26) prévue entre les sailles (34) et les renfoncements (36) peut être transmise lors de l'actionnement du volant de direction.

10. Volant de direction selon l'une des revendications précédentes, **caractérisé en ce que** l'amortisseur de vibrations (22) permet, en cas de fonctionnement extrême, une liaison continue par coopération de formes entre la zone de préhension (14) et le logement (13) de volant de direction.

11. Volant de direction selon l'une des revendications précédentes, **caractérisé en ce que** la substance (26) est reçue dans un espace (24 ; 50), et **en ce que** les parois limitant l'espace (24 ; 50) présentent une structure (52) qui est conçue de telle sorte qu'elle favorise l'adhérence de la substance (26) sur les parois.

12. Volant de direction selon l'une des revendications précédentes, **caractérisé en ce que** dans le volant de direction (10) sont prévues des électrodes (28) pour engendrer le champ (E) électrique ou magnétique.

13. Volant de direction selon l'une des revendications précédentes, **caractérisé en ce qu'**il est prévu une unité de commande (30) qui peut déterminer l'intensité du champ (E) électrique ou magnétique.

14. Volant de direction selon la revendication 13, **caractérisé en ce qu'**il est prévu des capteurs (32) qui peuvent détecter les vibrations de la colonne (31), en particulier du logement du volant de direction, et **en ce que** l'unité de commande (30) fait varier l'intensité de champ en fonction des vibrations détectées.

15. Volant de direction selon la revendication 14, **caractérisé en ce que** l'unité de commande (30) fait varier l'intensité de champ de telle sorte qu'aucune vibration n'est stimulée dans la zone de préhension (14).
